# EUROPEAN PATENT APPLICATION

(11) **EP 1 340 910 A1**
(43) Date of publication of application: **03.09.2003**
(21) Application number: 02425110.0
(22) Date of filing: 28.02.2002
(51) Int. Cl.: F03D 7/02, F03D 9/00

(54) **Aerogenerator with axial flux permanent magnets and regulation thereof**

(71) Applicant: Enel Green Power S.p.A., 56122 Pisa (IT)
(72) Inventor: Cavaliere, Massimo, 20154 Milano (IT)
(74) Representative: Sarpi, Maurizio

(57) **Abstract**

An improved variable speed aerogenerator, characterized in that it comprises, in combination, an axial flux permanent magnet generator or PMG (4) and passive means (3) for reducing the power and for security (thereafter called as "up-hinge") which start to operate as soon as the wind speed exceeds an established nominal value.

Said passive means for the regulation of the power are adapted to impose on the shuttle (7) a rotational movement (pitching) around a horizontal cross-pin (P), progressively displacing, on the vertical plane, the rotary disc (5) from the direction of the fluid vein, till to place, at the extreme wind conditions, the rotary disc in a horizontal plane for annulling the aerodynamic couple acting thereon.

## Description

The present invention relates to the production of electric energy and particularly to the conversion of eolian energy into electric energy by means of apparatuses with low environmental pollution (aerogenerators).

The increase of the emission of carbon dioxide and of pollutioning substances, characterizing the exploitation of the conventional energy sources, on the one side, and the limited availability of the fossil fuel reserves, on the other side, have induced the energetic field operators to devolve an increasing attention to the employment of the so called "renewable" energetic sources for the production of the electric energy.

At present, it could be affirmed that among the renewable sources, the eolian energy is, after the hydraulic energy, the most competitive one with respect to the traditional sources.

The environment advantage of the production of electric energy from eolian one, as an alternative for the use of the thermic plants is evident owing to the absence of emission of carbon dioxide, nitrogen oxides, sulphurous anhydrides, floating particles etc.

The eolian machines, at present existing on the market, are generally divided, as to their nominal power, into three classes:
◆ great size aerogenerators, even for off-shore applications, with a nominal power higher than 1MW;
◆ middle size aerogenerators connected to the electric network, with a unitary nominal power ranging from 50kW to 1 MW;
◆ small size aerogenerators with a unitary nominal power lower than 50kW for:
   - connexion to low voltage (LV) networks;
   - charging of batteries for feeding single users;
   - hybrid systems and feeding in islands.

The great and middle sized machines are those which represent up to day an enormous majority of the eolian market and which have had an exceptional development in the last 15 years, so that at present there are commercially available highly reliable and technologically advanced products at costs which render economically convenient the production of electric energy from the eolian energy.

On the contrary, the sector of the small size eolian machines remained in a humble market for limited applications and made by technologically and economically immature industries.

This is confirmed by that the constructors and suppliers of the small size eolian machines, which are numberous all over the world, are usually formed by small local realities, with a production near to the artisan (craft) one, which offers technologically few advanced solutions.

The examples of constructors with an industrial approach to this market are very rare.

This kind of machines requires, owing to both their sizes and typology of the applications for which they are intended as well as to the market type to which they usually apply (domestic users or small entrepreneurs), require a planning approach which is very different from that utilized for small and middle sized machines and which particularly satisfies the standards of simple construction, low costs and limited needs of maintenance.

As a matter of fact, the products which are available on the market frequently have problems as to:
- low energetic performances;
- limited reliability of same components;
- high unitary costs.

The main aim of the present invention is that to overcome the above said problems and drawbacks by providing a small sized aerogenerator characterized by a high aerodynamic efficiency; a simplicity of design and construction; an easy installation; low weights of its components; limited maintenance needs; passive control systems; an intrinsic security; correspondence to the technical rules of this sector, limited environmental pollution; limited emission of noises; economicity.

According to the invention, the embodiment of the aerogenerator allows to attain the following aims:
- minimizing the number of its components;
- minimizing the maintenance needs;
- minimizing the weight of the aerogenerator;
- maximizing the energetic performance;
- minimizing the emission of noises;
- rendering the machine intrinsically reliable.

For attaining the above aims, the aerogenerator has a wholly novel system configuration, which is not provided in other aerogenerators of same or different size, at present available on the market.

According to the present invention said aims have been attained by providing a variable speed aerogenerator, having preferably three blades, characterized in that it comprises, in combination, a axial flux permanent magnet generator (PMG) and a passive system for both the power limitation and security (thereafter said as "up-hinge") which enters in function at a wind speed higher than the nominal one.

In fact, the rotor is directly connected, by mechanical means, with a axial flux permanent magnet generator and uses, as a primary system for the power and speed regulation, at the wind speeds higher the nominal speed of the project and as a security systems for the limit wind speed, the pitching movement of the shuttle through the above said wholly passive system called "up-hinge".

The invention will be better understood from the following detailed disclosure of a preferred embodiment thereof shown only as a non limitative example in the enclosed drawings, in which:

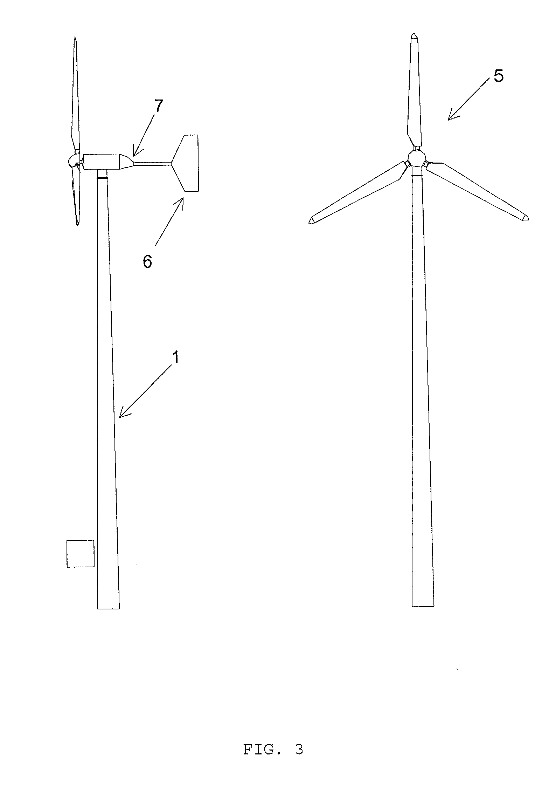

the figures 1, 2 and 3 schematically show the outer shape of the generator and the inner arrangement of same of its main parts;
the figure 4 is a simplified schematic view of the connection of the generator to the distribution network of the electric energy;
the figure 5 is a simplified schematic view showing the connection of same functioned parts of the invention;
the figure 6 is a flow-chart of the functional and control logic system according to the invention;
the figures 7A and 7B shows, respectively, the aerogenerator in the configuration of use and of power limitation due to an excessive wind;
the figure 8 shows a detail of the passive power limitation in the case of an excessive wind.

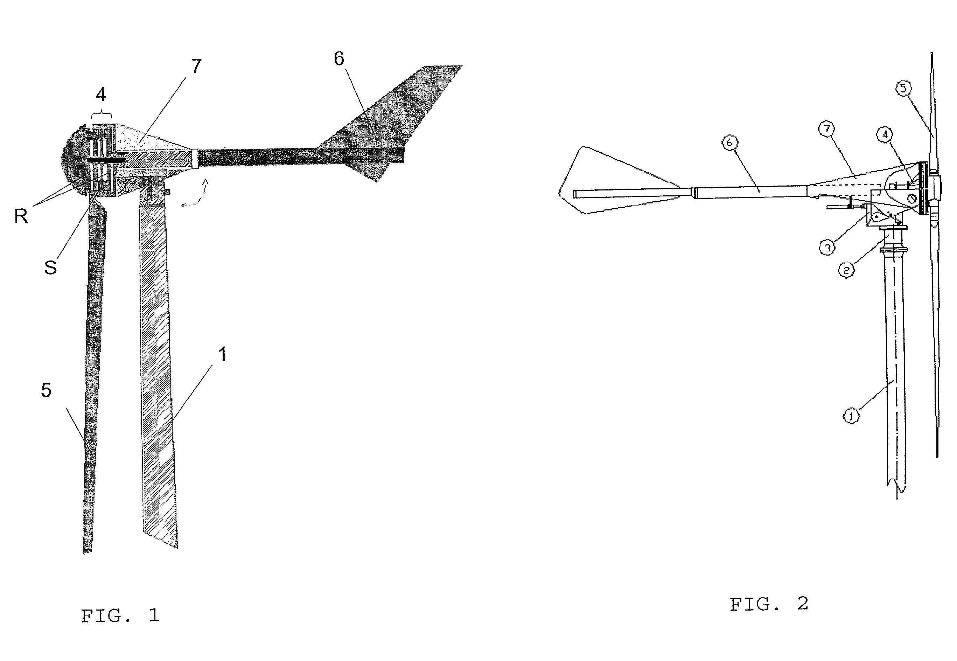

The eolian turbine according to the invention is designed for operating both for a parallel connection with a low voltage electric network and for feeding isolated users and hybrid systems in an island. A preferred embodiment (figures 1÷3), disclosed only as a non limitative example, relates to a machine having a nominal power of 20kW, whose main features are the following:
- a three blade rotor 5, arranged upwind to the support structure;
- a shuttle 7 having a support structure of steel and a fairing of glass reinforced plastic;
- a synchronous axial flux permanent magnet generator 4 operating at variable speeds;
- passive type means for the regulation of the yaw, which consists preferably of a drift or rudder 6 arranged leeward to the support 1;
- a conversion and control system adapted to perform a conversion AC/DC/AC assuring at the output a three-phase voltage of 400 V (e.g. for the connection to the electric network;
- a constant frequency of 50 or 60 Hz;
- an "up-hinge" device 3 for the passive limitation of the rotation speed and of the power delivery;
- a tower or tubular support of steel 1.

According to the invention, the regulation of the power of the rotor and of its rotation speed, at wind speeds higher than the nominal speed, occurs in a wholly reliable manner by means of two independent and redundant systems, of which one is of mechanic and the other of electric type.

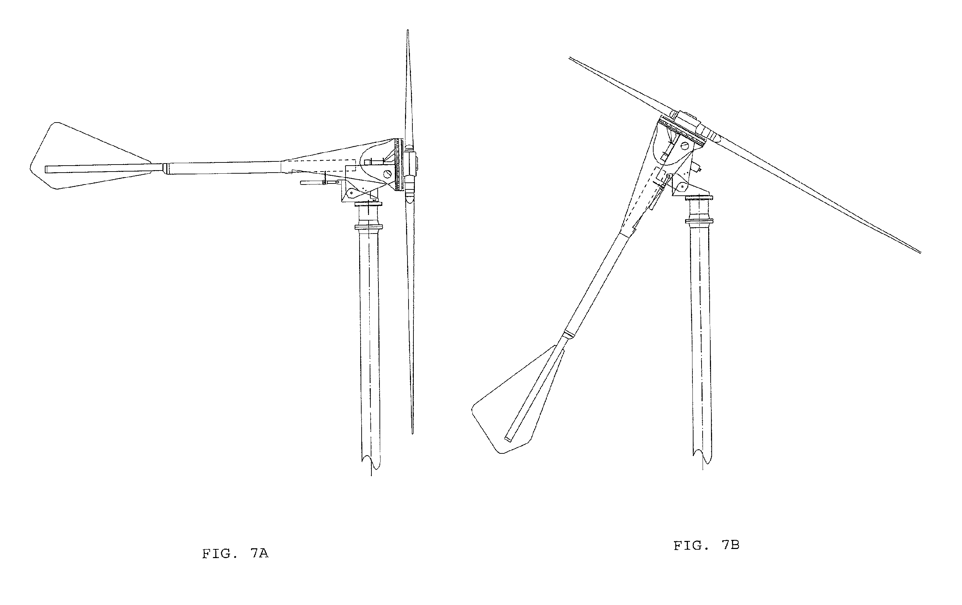

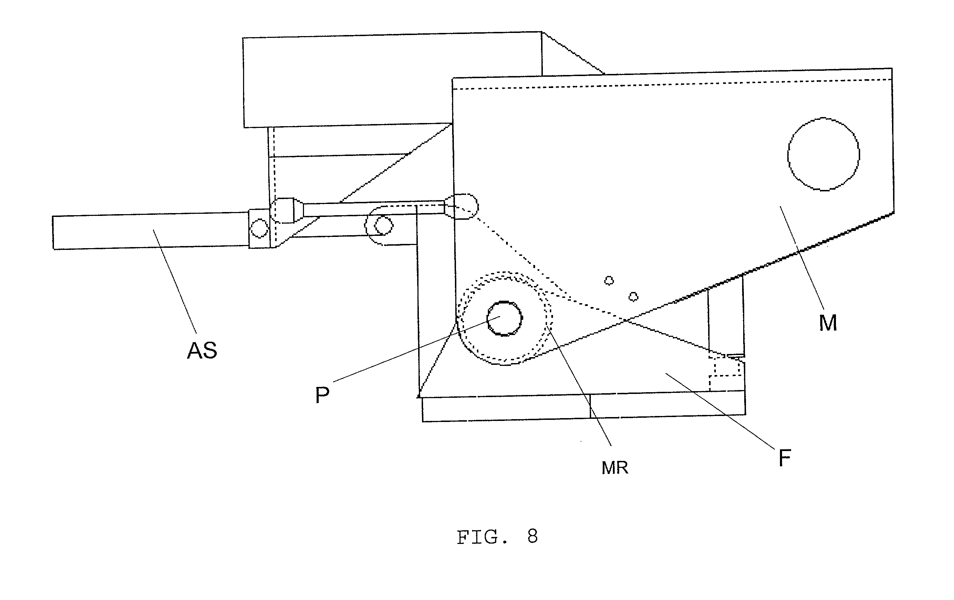

The mechanic or "up-hinge" device, wholly passive and intrinsically reliable, carries out a regulation of the power, preferably starting from 10,5 m/sec to impose on the shuttle a rotational movement (pitch) around a horizontal cross-pin P progressively disaligning on the vertical plane, the rotor disc from the fluid vein, till to putting, at extreme wind conditions, the rotor disc in a horizontal plane for annulling the aerodynamic couple acting on the rotor shaft (see figures 7A, 7B and 8).

In the event of sudden wind gusts, when the effect of the up-hinge device is not sufficiently speedy, a second electronic security system contributes to the regulation of the power by eventually causing, in a redundant manner with respect to the above said up-hinge device, the machine to stop, by gradually inserting suitable electric resistances, which provide the braking of the rotor by increasing the electric load.

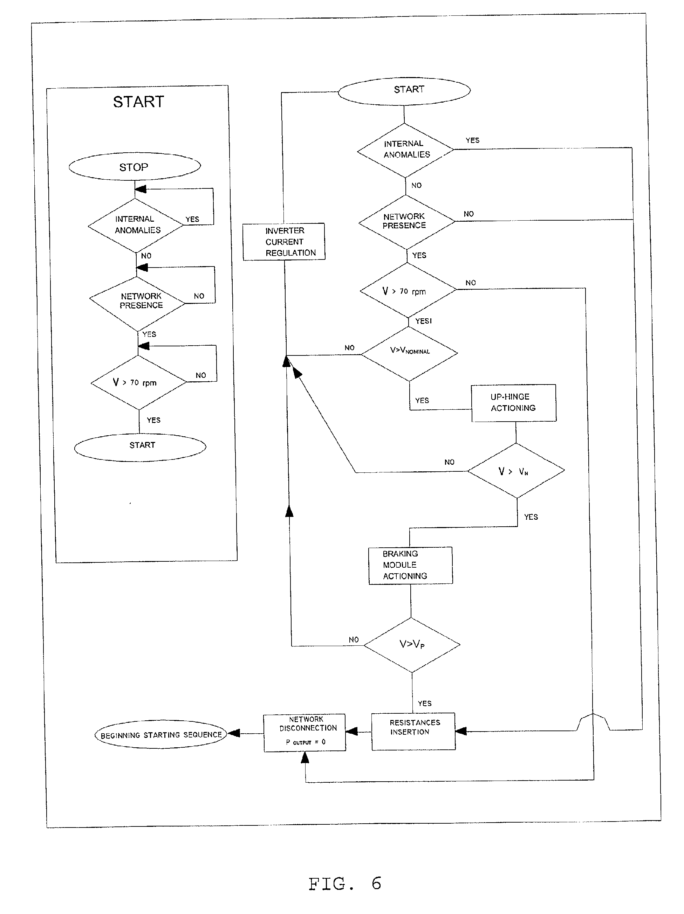

Both of said systems for controlling the power and speed, operate according the principle shown in the flow-chart of Fig. 6, which also represents the starting sequence.

It should be underlined that similar (but constructively different) passive mechanic control systems are used for other aerogenerators, but with the substantial difference that they have much smaller sizes and dimensions. The use of the up-hinge device as a passive security system for the reduction of the power, occurs normally in the commercial machines having a very small size, that is of a nominal power in the range of maximum a few kW, since the stresses acting in the aerogenerators presently used and having higher powers, render the up-hinge device sparely efficient and thus not utilizable.

According to a peculiar feature of the invention, the entity of the gyroscopic forces is limited by the particular aerodynamic design of the blades, by the smaller weights of the machine and, above all, by the use of an axial flux PMG, which besides being compact and light, allows to generate power at comparably low rotation speeds (lower than or equal to 200 rpm).

It is just thanks to the small entity of the forces and of the gyroscopic moments, that the invention makes it possible to utilize the "up-hinge" system even on aerogenerators pertaining to the small size category, but having comparatively high powers and dimensions (higher than 10kW), similar to that which is herein disclosed.

From the functional and constructional point of view, the "up-hinge" system shown in Figs. 7 and 8, consists of a mechanic system comprising:
- an upper movable support structure M, adapted to support the generator 4 and blades 5;
- a lower fixed support structure F, adapted to cooperate with the above said one and secured to the support tower or framework 1;
- a horizontal shaft P, with respective bearings, around which the above said upper movable support structure M can rotate with respect to the lower fixed structure F;
- a thrust and return spring system MR acting between said upper and lower support structures M and F;
- a hydraulic shock-absorber/damper AS for damping the oscillations between the said movable and fixed structures M and F.

In the present case, the fixed portion of the "up-hinge" device is fastened to the tower 1 so as to be capable to rotate around a vertical axis, for allowing the entire aerogenerator to rotate according the wind direction under the action of the drift or rudder 6.

The axial flux permanent magnet generators or PMG are not per se a novelty, since they have been employed as motors for some non eolian applications (e.g. lifts). They are multipolar synchronous generators, that is generators which are capable to generate a power, having a frequency near that of the network, at low rotation speeds, and thus without the need of over-gear (multiplicator of revolutions) to be interposed between the aerodynamic rotor (usually "slow") and the generator itself (usually "speedy").

The greatest part of the eolian machines uses, for the generation of power, generators of the "traditional" kind, that is inductional or synchronous generators with a static excitation, even it with some modifications.

There are several small sized machines which use permanent magnet generators or PMG, but such generators are of so called "radial" type, which is a more consolidated technology (the definition "radial" or "axial" relates to the direction of the magnetic flux within the generator).

The axial flux PMGs have, with respect to the radial flux ones, substantially two advantages (Fig. 1) :
- the geometry is of the kind of opposed bodies and thus more easily realisable with respect to the concentric cylindrical surfaces;
- the torque density for weight unit of the active materials is higher.

Until today only one type of aerogenerator with axial flux PMG is known, but it is a great size generator (750kW by Jeumont), which has however dimensional, functional and structural features very different from those of the PMG according to the present invention.

With this regard it should be noted that the axial flux PMG used in the present aerogenerator has been particularly realised according to the requirements of the invention.

From the mechanical point of view, the main peculiarity of the PMG according to the present invention consists in that the generator has no supports and joints, in fact there is a single axis which supports both the rotor and the blades, without speed reducer, since the rotor operates at a low rotation speed, with the direct keying of the blades. Thus, it does not exist an axis line from which the generator may be removed.

In the present embodiment, the generator is projected for supplying the produced energy on a low voltage network (about 400 V) at 50Hz, but it is also possible to provide a variant for charging the storage batteries of isolated users.

The electric arrangement of the machine substantially comprises the following components:
1. an axial flux permanent magnet generator 4;
2. a control and switch board;
3. a turnable commutator or "slip-ring";
4. sensors;
5. cables.

The three-phase generator 4 is rigidly connected with the shaft of the turbine ("direct drive system") and supplies a three-phase electric energy with variable frequency and amplitude.

Such energy passes through the slip-ring, placed on the coupling pivot 2 between the shuttle 7 and the tower 1, and arrives to the control and switch board which provides, in a known manner, a three-phase voltage at 50Hz at its output.

Said generator 4, which is of a synchronous three-phase permanent magnet type operating at variable speeds, may be advantageously employed without any modification also for feeding storage batteries of isolated plants and/or users. In such a case, the conversion system, connected to the generator, preferably carries out only the conversion AC/DC with the regulation of the output continuous voltage towards the batteries.

The particular constructive structure of the present axial flux generator allows to attain a very light and compact machine, the electro-mechanical features of which are particularly adapted for eolian applications.

The generator 4 consists of a (fixed) stator S isolated with resin or plastic material, which is arranged between two rotable discs R, whereon the permanent magnets are placed, and is provided with temperature sensors, preferably four thermo-resistances, for detecting the temperature of the stator winding.

The same function might be evidently attained by fixing the magnets and rotating the windings.

The nominal features of the machine are listed in the following table 1:

**TABLE 1**

| | |
|---|---|
| Nominal active continuous power (cosϕ=1) | 20kW |
| Nominal speed | 200 rpm |
| Number of poles (indicative) | 30 |
| Number of phases | 3 |
| Effective voltage at a nominal load | 400 V |
| Nominal frequency | 50 Hz |
| Nominal (electromagnetic) efficiency | > 88% |
| (Electromagnetic) efficiency at 1/3 of load | > 92% |
| Maximum total weight (active components) | 120 Kg |
| Limit outer diameter | 700 mm |

Preferably, the generator is excited by permanent magnets, consisting of a high-efficiency neodymium-iron-boron alloy, having suitable thermal resistance features.

The electric connections are preferably realized by anti-fire cables and the cables between the generator and slip-ring are preferably protected by cable-holder for the external applications. The output cables from the slip-ring pass within the tower for being then connected to the clamp unit of the control and switch board, the clamp unit having connectors which allow the electric sectioning of both power and signal portions.

Each machine is provided with a special electric control board, necessary for the interfacing with an electric network and with a single user.

Said control board comprises:
- means for carrying out the necessary conversion to feed the energy produced by the generator to a network or to a storage or hybrid system;
- means for managing in an automatic way the start/stop sequences of the machine both at the normal and anomalous operation conditions;
- means for controlling the correct operation of the generator and of the control-board itself;
- means for diagnosing possible anomalies of the system;
- means for diagnosing and memorizing the electric and mechanic values of the aerogenerator;
- means for continuously monitoring and visualizing the main electric and mechanic values of the machine.

More specifically, the conversion AC/DC/AC is carried out by an electronic system, preferably consisting of a rectifier bridge and an inverter with IGBT (Insulated Gate Bipolar Transistor) and PWM (Pulse With Modulation) technology.

The control board provides for the connection of the generator to the outer electric network as soon as a rotation speed, to be previously established, has been reached and for the disconnection thereof when the speed descend below an established minimum speed.

The braking of the generator is preferably carried out in automatic way by inserting a discharge resistance of variable value with a dedicated logic.

Said control board is provided with electric and electronic protections adapted to assure the security within the aerogenerator: in the event of an anomaly of the electric devices or of the LV (low voltage) network, the system will be put in a passive security position by braking the generator.

The board is also provided with a control panel, on which control devices, for controlling the system, as well as the warning lights indicating consents and anomalies are arranged.

Moreover, said board comprises known means adapted to visualize and render available at the outside, preferably by means of a serial interface for a connection to a PC, the following quantities or parameters:
- electric energy fed into the network;
- active power feeded into the network;
- generator nominal voltage;
- generator nominal current;
- generator temperature.

The above said parameters are visualized in real time on a monitor, on which there are also provided the consense and warning signals.

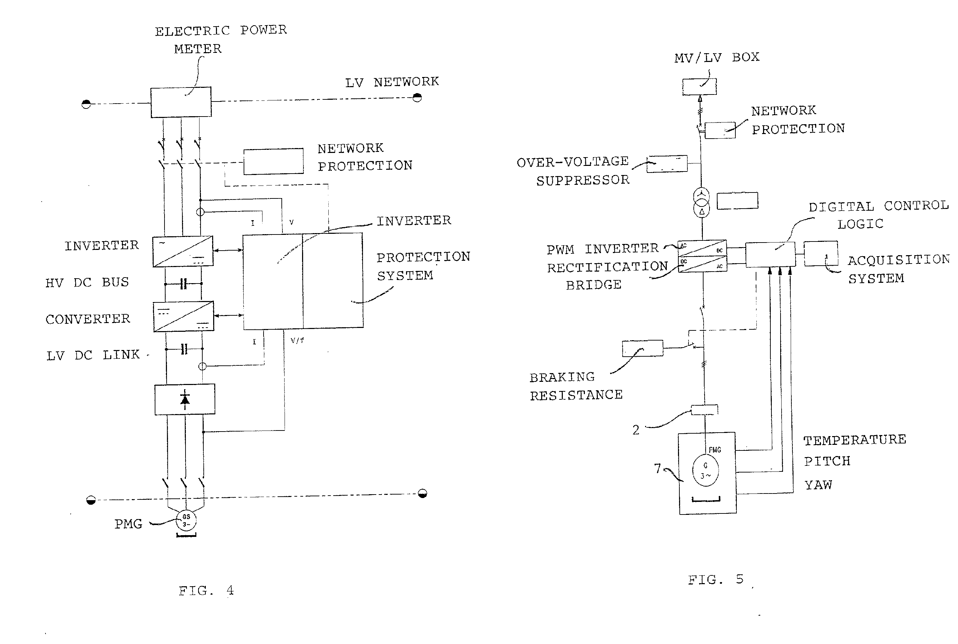

A simplified electric circuit for the connection with the LV network is shown in the figures 4 and 5.

The electric board of the generator, which preferably is a metallic one and has a limited size, e.g. of 1200x600mm, is placed at the base of the support tower 1 of each generator.

In each machine electric board there are arranged local control devices of the machine, LV electric boards and the protection devices.

For each generator there is provided the construction of the special emplacements, usually in concrete, for the foundations and for the cables for feeding the energy produced by the generator.

According to the present invention it is advantageously possible to realize eolian plants comprising one or more aerogenerator of the above disclosed type, which do not require the presence of an operator.

The management of such plants requires a frequency of the ordinary maintenance not below a period of 18 months.

The following table represents the production estimation for sites with different wind intensity (Weibull factor k=2) at standard atmospheric conditions.

The annual wind speed average is referred to the hub's height.

| Wind speed (m/s) | Production (MWh/year) |
|---|---|
| 4 | 13 |
| 5 | 24 |
| 6 | 37 |
| 7 | 50 |
| 8 | 61 |
| 9 | 70 |
| 10 | 77 |
| 11 | 82 |

The present invention has been disclosed and illustrated in a preferred embodiment, it being however within the knowledge of a skilled in the art to provide modifications and/or technically of functionally equivalent solutions, within the scope of the enclosed claims.

## Claims

1. An improved variable speed aerogenerator, **characterized in that** it comprises, in combination, an axial flux permanent magnet generator or PMG (4) and passive means (3) for reducing the power and for security (thereafter called as "up-hinge") which start to operate as soon as the wind speed exceeds an established nominal value.

2. An aerogenerator according to claim 1, **characterized in that** it comprises:
- a rotor with one or more blades (5) arranged upwind to a support structure;
- a shuttle (7) with a support structure of steel and a fairing of glass reinforced plastic;
- a synchronous axial flux permanent magnet generator or PMG (4) operating at a variable speeds;
- passive type means for the regulation of yaw, consisting for example by a drift or rudder (6) arranged leeward to the support structure;
- conversion and control means adapted to realize a AC/DC/AC conversion which assures at the output a three-phase voltage of about 400V (e.g. for the connection to the electric network) with a constant frequency of 50 or 60 Hz;
- an "up-hinge" device (3) for limiting in a passive way the rotation speed and the delivered power;
- a tower or tubular support of steel (1).

3. An aerogenerator according to the preceding claim, **characterized in that** the rotor (5) is directly connected by mechanical means to the axial flux permanent magnet generator (4) and uses, as primary system for the regulation of the power and of the revolutions at wind speeds higher than the established nominal speed, as well as the security system for the limit wind speed, the pitching movement of the shuttle (7) by means of the above said wholly passive "up-hinge" (3).

4. An aerogenerator according to any one of the preceding claims, **characterized in that** the wholly passive and intrinsically safe mechanical device or "up-hinge" (3) carries out a regulation of the power by imposing on the shuttle (7) a rotational movement (pitching) around a horizontal cross-pin (P), progressively displacing, on the vertical plane, the rotary disc (5) from the direction of the fluid vein, till to place, at the extreme wind conditions, the rotary disc in a horizontal plane for annulling the aerodynamic couple acting thereon.

5. An aerogenerator according to the preceding claim, **characterized in that** in presence of rudder wind gusts, when the intervention of the up-hinge device (3) is not sufficiently quick, a second electronic security system contributes to the regulation of the power by stopping the machine in a redundant manner with respect to the above said up-hinge device and gradually inserting suitable electric resistances, thus increasing the clcctric load and causing the braking of the rotor.

6. An aerogenerator according to any one of the preceding claims, **characterized in that** for reducing the entity of the gyroscopic forces and moments, there are provided suitable small weight blades (5) and an axial flux PMG (4) which, besides to be light and compact, allows to generate powers at rotational speed lower than or equal to 200 rpm.

7. An aerogenerator according to any one of the preceding claims, **characterized in that** the up-hinge device essentially consists of a mechanical system including:
- an upper movable support structure (M), adapted to support the generator (4) and the blades (5) ;
- a lower fixed support structure (F) adapted to cooperate with said movable structure and secured to the support tower or framework (1) ;
- a horizontal pin (P) with respective bearings, around which the above said upper mobile structure (M) can rotate with respect to the lower fixed structure (F);
- a system of thrust and return springs (MR) which operate between the above said upper and lower structures (M and F) ;
- a hydraulic shock-absorber/damper (AS) for damping the relative oscillations between the movable and fixed structures (M, F).

8. An aerogenerator according to claim 2,
**characterized in that** the fixed portion (F) of the up-hinge device is secured to the tower (1) so as to be able to rotate around a vertical axis for causing the entire aerogenerator to rotate according to the direction of wind by means of the drift or rudder (6).

9. An aerogenerator according to any one of the preceding claims, **characterized in that** the generator or PMG (4) has no supports or points, in fact a single axis is provided for supporting both the rotor and the blades (5), without speed reductions, since the rotor operates at low rotation speeds at its blades are directly keyed on the axis.

10. An aerogenerator according to any one of the preceding claims, **characterized in that** the electric configuration of the machine substantially comprises the following components:
A. axial flux permanent magnet generator (4) ;
B. control and switch board;
C. rotary commutator or "slip-ring";
D. sensors;
E. cables.

11. An aerogenerator according to the preceding claim, **characterized** to in that the three-phase generator (4) is rigidly fastened to the shaft of the eolian turbine and feeds a three-phase voltage electric energy, with variable frequency and amplitude, through the slip-ring arranged on a coupling sleeve (2) between the shuttle (7) and the tower, to the central switch board, which assures, in a known manner, a three-phase output voltage at 50Hz.

12. An aerogenerator according to any one of the preceding claims, **characterized in that** said electric generator, which is of a synchronous permanent magnet three-phase type operating at variable speeds, feeds batteries of isolated plants or users and in such a case the conversion system connected to the generator carries out the sole conversion AC/DC with the DC voltage adjustment at the output toward the batteries.

13. An aerogenerator according to any one of the preceding claims, **characterized in that** the generator (4) comprises a (fixed) stator (S) which is isolated by resin and is arranged between two rotary discs (R), whereon permanent magnets are applied, and it is provided with temperature sensors for detecting the temperature of the stator winding.

14. An aerogenerator according to any one of the preceding claims, **characterized in that** the excitation of the generator (4) is realized by permanent magnets, consisting of a high-efficiency neodymium-iron-boron alloy having thermic resistance proprieties adapted for the application.

15. Aerogenerator according to claim 10,
**characterized in that** the above said control switch board comprises:
- means for carrying out the necessary conversion so as to feed the energy, produced by the generator, to a network or to a storage or hybrid system;
- means for managing in an automatic manner the start/stop sequences of the machine, both in the normal and anomalous operation conditions;
- means for controlling the correct operation of the generator and control board itself;
- means for diagnosing possible anomalies of the system;
- means for detecting and memorizing the electric and mechanic parameters of the aerogenerator;
- means for continuously visualizing the main electric and mechanic parameters of the machine.

16. Aerogenerator according to the preceding claim, **characterized in that** the conversion AC/DC/AC is performed by an electronic system consisting of a rectifier bridge and IGBT (Insulated Gate Bipolar Transistor) inverter with PWM (Pulse Width Modulation) technology.

17. An aerogenerator according to claim 15, **characterized in that** the control board carries out both the connection of the generator to the outer electric network when a previously established rotation speed has been reached and the disconnection of the generator from the network when the speed descends below and established minimum value.

18. An aerogenerator according to claim 15, **characterized in that** the braking of the generator is carried out in an automatized manner by inserting a discharge resistance having a variable value with dedicated logic.

19. An aerogenerator according to claim 15, **characterized in that** said control board has electric and electronic protections capable to assure the security of the entire aerogenerator: in the event of an anomaly of the electric devices or of the network LV the system will be put in the passive security position by braking the generator; the control board being also provided with a control panel on which there are provided control devices for controlling the system and consent and warning lights relative to consents and anomalies.

20. An aerogenerator according to claim 15, **characterized in that** said control board is provided with known means adapted to visualize and render available on the outside, through a serial interface for the connection with a PC, the following parameters:
- electric energy delivered to the network;
- active power delivered to the network;
- nominal voltage of generator;
- nominal current of generator;
- temperature of generator;
the above said parameters being visualized in real time on a proper monitor, where there are moreover provided the consent and warning signals.
